# EUROPÄISCHE PATENTSCHRIFT

(11) **EP 0 798 182 B1**
(45) Veröffentlichungstag und Bekanntmachung des Hinweises auf die Patenterteilung: **27.03.2002**
(21) Anmeldenummer: 96120308.0
(22) Anmeldetag: 18.12.1996
(51) Int. Cl.: B60S 1/04

(54) **Lagerung von Antriebswellen einer Wischeranlage**
Bearing of drive shafts of a windscreen wiper device
Palier pour arbre d'entraînement d'un dispositif d'essuie-glace

(30) Priorität: 26.03.1996 DE 19611920; 16.10.1996 DE 19642666
(43) Veröffentlichungstag der Anmeldung: 01.10.1997
(73) Patentinhaber: ROBERT BOSCH GMBH, 70442 Stuttgart (DE)
(72) Erfinder: Muehlpforte, Kurt, Ing., 77815 Buehl (DE); Becker, Henk, Ing., 77815 Buehl (DE); Fleischer, Claus, Ing., 77815 Buehl (DE); Boos, Tino, Dipl.-Ing. (FH), 76532 Baden-Baden (DE)

(56) Entgegenhaltungen:
- EP-A- 0 635 651
- EP-A- 0 739 793
- EP-A- 0 897 357
- WO-A-92/04563
- DE-A- 4 333 484
- DE-A- 4 409 957
- FR-A- 2 667 833

## Beschreibung

### Stand der Technik

Die Erfindung geht von einer Wischeranlage aus, gemäß den Merkmalen des Oberbegriffs des Patentanspruchs 1. Eine derartige Wischeranlage ist in der DE-A-4 333 484 bzw. FR-A-2 667 833.

Wischeranlagen, insbesondere für Kraftfahrzeuge, werden mit einer Rohrplatine an der Karosserie des Kraftfahrzeugs befestigt. An der Rohrplatine ist ein Wischerantrieb und mindestens ein Wischerlager angeordnet. Das Wischerlager wird durch ein rohrförmiges Element gebildet, das sich an der Rohrplatine befindet und in das eine Lagerbuchse eingesetzt ist.

In den Lagerbuchsen sind Abtriebswellen gelagert, die in der Regel über ein Gestänge vom Wischerantrieb angetrieben werden. Auf die Abtriebswellen, die aus der Karosserie ragen, sind Wischer aufgesteckt.

Eine solche Wischeranlage ist beispielsweise mit der DE-A-43 33 484 bekannt geworden. Die dort gezeigte Wischeranlage weist eine Rohrplatine auf, die aus einem geraden Rohr besteht, an dessen freien Enden Befestigungselemente angebracht sind, die jeweils ein Wischerlager tragen.

Weiterhin ist in der EP-A-0 635 651 ein Wischerlager gezeigt, welches im Wesentlichen aus einem Rohr besteht, in das eine zylinderringförmige Lagerbuchse eingepreßt ist. Die Lagerbuchse ist durch eine kraftschlüssige Verbindung zwischen Rohr und Lagerbuchse am Herausfallen und am Mitdrehen gesichert.

### Vorteile der Erfindung

Die erfindungsgemäße Lagerung mit den Merkmalen des Anspruchs 1 hat den Vorteil, daß auch bei kleinen, insbesondere kurzen Stützflächen die Lagerbuchse durch Formschluß in Umfangsrichtung und / oder in axialer Richtung-sicher fixiert ist. Zumal bei dünnwandigen Teilen mit größeren Toleranzen, kein sicherer und dauerhafter Preßsitz erreicht werden kann, ist der Formschluß besonders vorteilhaft.

Die Abtriebswelle kann in axialer Richtung vorzugsweise auf der Lagerbuchse abgestützt werden, jedoch auch auf dem rohrförmigen Element. Wird die Abtriebswelle auf der Lagerbuchse abgestützt, tritt ein geringer Verschleiß auf und es ist kein zusätzlicher Lagerring erforderlich.

Durch den Formschluß ist gewährleistet, daß die Lagerbuchse auch bei dünnwandigen Teilen auf Dauer in Umfangsrichtung fixiert ist. Vorzugsweise wird eine Axialsicherung durch Zusammenbau erreicht. Der formschlüssige Verbund kann zusätzlich einzelne kraftschlüssige Bestandteile aufweisen. Beispielsweise kann in einzelne Richtungen eine Fixierung vollständig durch Kraftschluß oder durch eine Kombination von Kraftschluß und Formschluß erreicht werden.

Mit einfachen konstruktiven Mitteln und damit kostengünstig wird die Lagerbuchse mit einem oder zwei Bünden in eine oder in beide axialen Richtungen durch Formschluß fixiert. Der Bund kann an die Lagerbuchse angeformt oder durch ein zusätzliches, mit der Lagerbuchse verbundenes, Bauteil gebildet werden. Weist ein Bund in axialer Richtung nach außen eine axiale Anlauffläche auf, kann die Abtriebswelle günstig auf großen Flächen anlaufen und damit in diese Richtung axial formschlüssig fixiert werden. Hat die Lagerbuchse zwei Bünde mit axialen Anlaufflächen, kann die obere und die untere axiale Anlauffläche leicht gleich groß gestaltet werden. Oben und unten treten die gleichen Verschleißerscheinungen auf, die Lebensdauer oben und unten ist gleich.

In einer Ausgestaltung der Erfindung weist das rohrförmige Element eine von der Kreisform abweichende, insbesondere polygonförmige oder eine unrunde, z.B. eine beliebig ellipsenförmige, Innenkontur auf und die Lagerbuchse eine passende Außenkontur, wodurch in Umfangsrichtung ein Fcrmschluß erreicht wird. Passend kann bedeuten, daß die Außenkontur der Lagerbuchse genau der Innenkontur des rohrförmigen Elements entspricht, jedoch auch, daß nur bestimmte Umfangsbereiche miteinander in Anlage kommen, beispielsweise indem eine dreieckige Innenkontur in eine fünfeckig Außenkontur formschlüssig greift usw.. Ein Formschluß kann auch durch eine Verzahnung zwischen Lagerbuchse und dem rohrförmigen Element erreicht werden. Die Kontaktflächen zwischen der Lagerbuchse und dem rohrförmigen Element können grundsätzlich auch rund sein. Die Fixierung in Umfangsrichtung kann dann durch Kraftschluß, eine Stoffverbindung, durch Formschluß mit einem zusätzlichen Bauteil oder durch eine Kombination davon erreicht werden.

Ist die Kontur zwischen dem Lagerstutzen und dem rohrförmigen Element in Längsrichtung konisch gestaltet, wird der Einführvorgang zu Beginn erleichtert, weil ein kleiner Außendurchmesser der Lagerbuchse auf einen großen Innendurchmesser des rohrförmigen Elements trifft. Erst am Ende des Montagevorgangs treffen die beiden Teile mit ihren Fügeflächen aufeinander. Der Montagevorgang insbesondere bei Stützflächen mit beträchtlichem axialen Abstand und formschlüssigem Verbund wird hierdurch erleichtert. Zudem kann eine gewünschte Vorspannung durch die konische Kontur erzeugt werden. In einer Ausgestaltung der Erfindung wird dieser Effekt auch durch eine abgestufte Kontur zwischen der Lagerbuchse und dem rohrförmigen Element erreicht. Bei einer konischen oder abgestuften Kontur und Stützflächen mit axialem Abstand reicht eine von der Kreisform abweichende Stützfläche, d. h. Innenkontur des rohrförmigen Elements, und eine passende Außenkontur des Lagerbuchse aus, um einen Formschluß zu erreichen.

Ist die Lagerbuchse in Querrichtung geteilt, können Lagerbuchsen mit an beiden Enden angeformter- Bünden verwendet werden.

Die mehreren Teile der Lagerbuchse werden vorzugsweise ineinander geschoben und durch Zentrier- oder Paßflächen axial fixiert. Eine vorteilhafte Ausgestaltung besteht in einer Rast- bzw. Schnappverbindung, wodurch ein besonders fester und fettdichter Sitz erreicht wird.

Es ist vorteilhaft bei Stützflächen mit beträchtlichem axialen Abstand, wie sie z.B. bei Trägern mit Hohlprofil vorkommen, eine durchgehend Lagerbuchse zu verwenden bzw. eine geteilte Lagerbuchse, deren Teile sich gegeneinander an den Teilflächen abstützen.

Wird auf die Lagerbuchse ein Lagerring aufgeschraubt oder aufgeschoben, beispielsweise durch Kraftschluß aufgepreßt, und dadurch ein Bund gebildet, können die Vorzüge einer Lagerbuchse mit zwei angeformten Bünden erzielt werden, ohne das die Lagerbuchse in Querrichtung geteilt werden muß. Das heißt, daß beispielsweise oben und unten große, von der Fläche gleiche Anlaufflächen erzielt werden können. Ferner kann günstig ein Bauraum für eine Dichtung, beispielsweise für einen O-Ring, in die Lagerbuchse integriert werden, indem der Lagerring in axialer Richtung über die Lagerbuchse vorsteht und mit dem vorstehenden Teil zur Abtriebswelle den Bauraum für die Dichtung bildet. Es wird eine fettdichte Lagerung erzielt.

In einer Ausgestaltung der Erfindung, wird die Wandung der Lagerbuchse als Anlauffläche genutzt. Dies kann oben und unten oder nur auf einer Seite der Lagerbuchse der Fall sein. Vorzugsweise wird hierfür eine Lagerbuchse mit einer etwas größeren Wandstärke verwendet, damit eine möglichst große Anlauffläche und auf diese Weise eine stabile Lagerung, mit geringem Verschleiß und hoher Lebensdauer erreicht wird. Wird die Wandung der Lagerbuchse als Anlauffläche genutzt, kann die Lagerbuchse mit Ringen und Dichtungen auf der Welle als Baugruppe günstig vormontiert und anschließend .in das rohrförmige Element eingepreßt werden. Es wird dadurch eine einfache, besonders für die Großserie geeignete Montage erzielt.

Mit einem Sicherungsring oder einem ähnlichen Sicherungselement, wie beispielsweise mit einer sogenannten Speednut, kann die Lagerbuchse axial fixiert werden. Der Sicherungsring kann auf die Lagerbuchse aufgesteckt oder aufgeschraubt sein, beispielsweise indem dieser durch eine Überwurfmutter gebildet wird. Ferner kann er als Schutzkappe gestaltet werden, wodurch die Lagerung vor Wasser, Schmutz und sonstigen Bestandteilen geschützt wird.

Außerdem kann die Baugruppe axial einfach fixiert werden, indem die Lagerbuchse am Umfang eine oder mehrere Vertiefungen, z.B. Nuten usw., aufweist, in die das rohrförmige Element eingedrückt wird, beispielsweise durch Prägen.

Ferner kann die Lagerbuchse in einer Baugruppe zusammen mit der Welle, mit Dichtungen und Scheiben oder einzeln in axialer Richtung mit einer Federzunge fixiert werden. Diese ragt über die Außenkontur der Lagerbuchse heraus und ist entgegen der Montagerichtung gerichtet. Während der Montage wird sie in einen Freiraum gedrückt und hintergreift in der Montageendlage eine axiale Anschlagfläche. Die axiale Anschlagfläche wird vorzugsweise von dem äußeren Rand des rohrförmigen Elements gebildet. Um eine Lagerbuchse mit Bund zu fixieren, reicht allein die Federzunge aus. Günstig wird dies mit einer in einem Spritzvorgang der Lagerbuchse mit angespritzten Federzunge erreicht.

In einer vorzugsweiser. Ausgestaltung der Erfindung wird das rohrförmige Element mit einem Dorn vor der Montage kalibriert. Der Dorn kann profiliert gestaltet sein, beispielsweise mit einer Verzahnung, um eine Fläche zu schaffen, die mit einer entsprechend gestalteten Außenkontur der Lagerbuchse, einen form- oder kraftschlüssigen festen Verbund bildet.

In machen Fällen ist es günstig den Formschluß durch Kraftschluß zu ergänzen, um eine optimale Spielfreiheit zu erreichen. Hierzu eignet sich besonders, wenn die Lagerbuchse an ihrem Umfang einen Bereich aus verformbaren Material aufweist. Das Material, z. B. ein geeigneter Kunststoff, kann der Werkstoff für die ganze Lagerbuchse sein oder nur als Schicht in dem Bereich der Lagerbuchse aufgetragen werden. Zweckmäßigerweise erhält der äußere Bereich einen Rändel bzw. Längsrändel, der zum Bund hin durch eine ringförmige Vertiefung, z.B. durch eine Ringnut, begrenzt ist. Bei der Montage paßt sich der verformbare Teil den Fügeflächen an und gleicht Toleranzen aus. Insbesondere bei einem Rändel werden die Spitzen des Rändels beim Einschieben in die vorhandenen Zwischenräume des Rändels gepreßt, wodurch sich nach der Montage ein verhältnisnäßig großer Traganteil mit einem guten Kraftschluß ergibt. Werkstoff, der sich unter Umständen bei der Montage geringfügig abschält, sammelt sich in der Ringnut unter dem Bund, ohne eine präzise Anlage des Bundes zu beeinträchtigen. Dies ist deshalb wichtig, weil die Stelle unter dem Bund schwer zu kontrollieren ist.

Je nach dem, mit welchem Verfahren das rohrförmige Element hergestellt wird, weist seine äußere Kontur eine geringere Toleranz auf als seine innere Kontur. Dies tritt beispielsweise bei der Anformung der rohrförmigen Elemente mit einem Innenhochdruckverfahren auf, bei dem ein Rohrstück unter hohem Druck von innen gegen eine Werkzeugform gepreßt wird. In solchen Fällen, kann die Lagerbuchse am äußeren Umfang des rohrförmigen Elements zentriert werden. Hierzu greift ein Bund der Lagerbuchse über das rohrförmige Element und kommt am äußeren Umfang des rohrförmigen Elements zur Anlage. Toleranzen und Spiele auf der Innenseite werden vorzugsweise durch einen verformbaren Bereich in der Lagerbuchse ausgeglichen, wie dies zuvor beschrieben ist.

Eine Dichtung verhindert in vorteilhafter Weise, daß Fett aus dem Lager austritt, so daß eine Lebensdauerschmierung gewährleistet ist. Für die Dichtung ist ein Bauraum in der Lagerbuchse platzsparend integriert, beispielsweise im Bund oder in der Wandung der Lagerbuchse.

Mit Schmiernuten bzw. Schmiertaschen, die vorzugsweise in axialer Richtung in der Lagerbuchse angeordnet sind, wird auf eine konstruktiv einfache Weise eine ausreichende Fettmenge bevorratet und für die Schmierung der Abtriebswelle in der Lagerbuchse verteilt.

Die erfindungsgemäße Lagerung besitzt besonders bei Rohrplatinen mit Hohlprofil und angeformten rohrförmigen Elementen große Vorteile, aber auch bei rohrförmigen Elementen mit durchgehenden Aufnahmebohrungen kann sie vorteilhaft angewendet werden.

### Zeichnung

In der Zeichnung sind Ausführungsbeispiele der Erfindung dargestellt. In der Beschreibung und in den Ansprüchen sind zahlreiche Merkmale in. Zusammenhang aufgeführt und beschrieben. Der Fachmann wird die Merkmale zweckmäßigerweise auch einzeln betrachten und zu weiteren sinnvollen Kombinationen zusammenfassen.

Es zeigen:
- Fig. 1: eine zweiteilige Lagerbuchse mit Paßflächen,
- Fig. 2: eine zweiteilig Lagerbuchse mit einer Rastverbindung,
- Fig. 3 - 5: polygonförmige Innen- und Außenkonturen des rohrförmigen Elements und der Lagerbuchse,
- Fig. 6: eine unrunde Innen- und Außenkontur des rohrförmigen Elements und der Lagerbuchse,
- Fig. 7: eine runde Innen- und Außenkonturen des rohrförmigen Elements und der Lagerbuchse,
- Fig. 8: eine Lagerbuchse mit konischer Kontur,
- Fig. 9: eine Lagerbuche mit gestufter Kontur,
- Fig. 10: eine Lagerbuchse mit Lagerring,
- Fig. 11: eine Lagerbuchse mit aufgeschobenem Lagerring,
- Fig. 12: eine Lagerbuchse, deren Wandung als Anlauffläche genutzt wird mit Sicherungsring,
- Fig. 13: eine Lagerbuchse, deren Wandstärke als Anlauffläche genutzt wird mit Überwurfmutter,
- Fig. 14: eine Lagerbuchse mit einem Sicherungsring, die zusätzlich als Schutzkappe gestaltet ist,
- Fig. 15: eine Lagerbuchse, die am Umfang eine Nut aufweist, in die das rohrförmige Element eingedrückt wird,
- Fig. 16: eine Schnittzeichnung entlang der Linie XVI-XVI in Figur 15,
- Fig. 17: eine Lagerbuchse mit einer Federzunge am Umfang,
- Fig. 18: eine Ansicht entlang der Linie XVIII-XVIII in Figur 17,
- Fig. 19: eine Lagerbuchse, die an ihrem Umfang einen Rändel aufweist, der zum Bund hin durch eine Nut begrenzt ist,
- Fig. 20: eine Lagerbuchse, bei der ein Bauraum für eine Dichtung im Bund integriert ist,
- Fig. 21: eine Lagerbuchse, bei der ein Bauraum für eine Dichtung in der Wandung integriert ist,
- Fig. 22: eine Lagerbuchse mit Schmiernuten und
- Fig. 23: eine Draufsicht einer Lagerbuchse mit Schmiernuten.

### Beschreibung der Ausführungsbeispiele

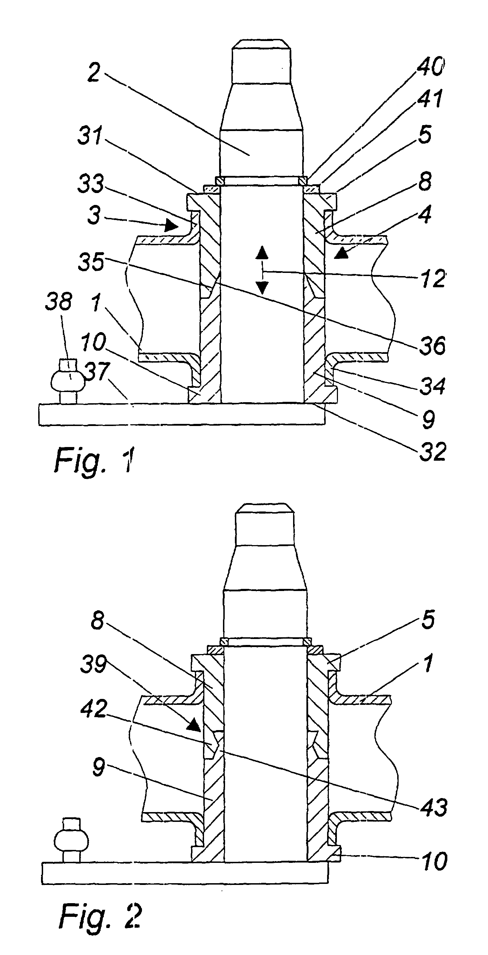

In Figur 1 ist ein Ausschnitt einer Rohrplatine 1 mit einem Hohlprofil dargestellt, an die ein rohrförmiges Element 3 angeformt ist, beispielsweise mit einem Innenhochdruckverfahren. Das rohrförmige Element 3 wird durch gegenüberliegende, nach außen weisende ringförmige Kragen 33, 34 gebildet. In das rohrförmige Element 3 ist eine in Querrichtung zweigeteilte Lagerbuchse 4 eingesetzt, die aus Kunststoff oder aus Metall hergestellt sein kann. Diese besteht aus einem ersten Teil 8 und einem zweiten Teil 9. Jedes der Teile 8, 9 hat in axialer Richtung 12 nach außen hin einen Bund 5, 10, die nach außen mit axialen Anlaufflächen 31, 32 und nach innen formschlüssig mit den Stirnseiten der ringförmigen Kragen 33, 34 abschließen. Das erste Teil 8 der Lagerbuchse 4 wird von oben und das Teil 9 der Lagerbuchse wird von unten in das rohrförmige Element 3 eingeführt. Die Teile 8, 9 werden ineinander gesteckt und durch Paßflächen 35, 36 in axialer Richtung 12 nach außen fixiert, indem eine Paßfläche 35 eine Übermaßpassung aufweist.

In der Lagerbuchse 4 wird eine Abtriebswelle 2 gelagert, die sich in axialer Richtung 12 von unten nach oben mit einem Steg 37 an der Anlauffläche 32 des unteren Bundes 10 abstützt. Von einem Wischerantrieb wird die Abtriebswelle 2 über eine auf dem Steg 37 angeordnete Gelenkkugel 38 angetrieben.

In axialer Richtung 12 von oben nach unten stützt sich die Abtriebswelle 2 mit einem Sicherungsring 40 und einem Anlaufring 41 auf der oberen Anlauffläche 31 des oberen Bundes 5 ab. Es wird also in axialer Richtung 12 ein formschlüssiger Verburd gebildet, indem sich die Abtriebswelle 2 auf den Anlaufflächen 31, 32 der Lagerbuchse 4 abstützt und sich diese wiederum mit den Innenseiten der Bünde 5, 10 auf den Stirnflächen der ringförmigen Kragen 33, 34 abstützen.

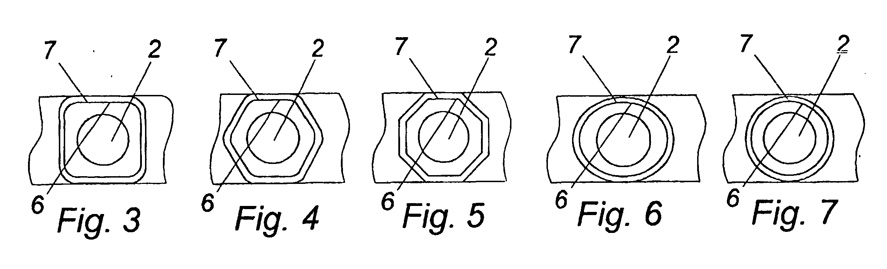

Die axiale Sicherung nach außen der Teile 8, 9 wird in einer Ausführung nach Figur 2 durch eine Rastverbindung 39 erzielt. Die Rastverbindung 39 besteht aus zwei ringförmigen Stegen 42, 43, die beim Ineinanderschieben der Teile 8, 9 in Querrichtung, nämlich einer nach innen und einer nach außen, ausweichen und anschließen in der Montageendlage ineinander verhaken.

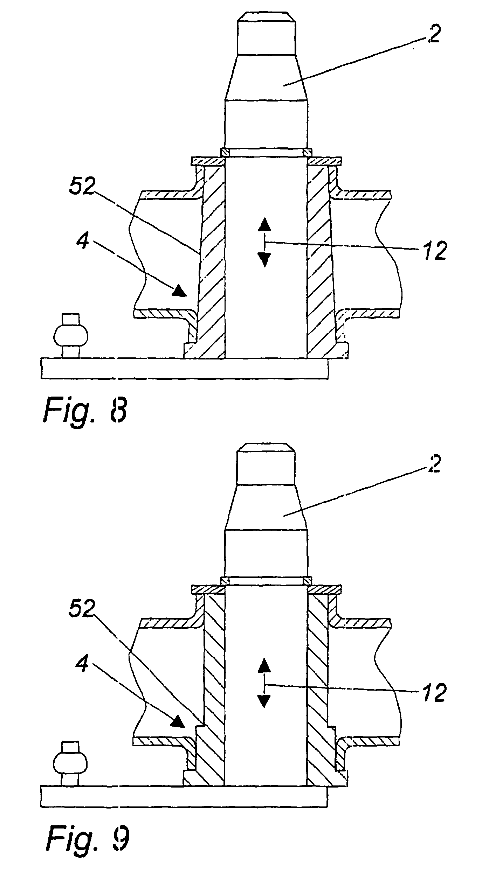

Erfindungsgemäß wird die Lagerbuchse 4 in Umfangsrichtung durch Formschluß fixiert, indem das rohrförmige Element 3 eine von der Kreisform abweichende, insbesondere polygonförmige oder unrunde Innenkontur 6 und die Lagerbuchse 4 eine passende Außenkontur 7 aufweist. In Figur 3 ist beispielsweise eine viereckige, in Figur 4 eine sechseckige und in Figur 5 eine achteckige Innen- 6 und Außenkontur 7 dargestellt. Grundsätzlich sind sämtliche Polygonformen denkbar. In Figur 6 ist eine unrunde elliptische Innenkontur 6 des rohrförmigen Elements 3 und eine entsprechende Außenkontur 7 der Lagerbuchse 4 dargestellt. Grundsätzlich ist auch eine runde Innenkontur 6 und Außenkontur 7 denkbar, wie sie in Figur 7 dargestellt sind. Die Fixierung in Umfangsrichtung kann dann durch Kraftschluß, eine Stoffverbindung, durch Formschluß mit einem zusätzlichen Bauteil oder durch eine Kombination davon erreicht werden.

In Figur 8 ist eine Lagerbuchse 4 und ein rohrförmiges Element 3 dargestellt, die in axialer Richtung 12 eine konische Kontur 52 aufweisen. Hierdurch wird der Einführvorgang erleichtert, weil zuerst der obere kleine Außendurchmesser der Lagerbuchse 4 auf den unteren großen Innendurchmesser des rohrförmigen Elements 3 trifft und erst am Ende des Montagevorgangs der Fügevorgang vollzogen wird. Der gleiche Effekt wird erreicht, wenn die Kontur 52 in axialer Richtung 12 abgestuft ist, wie dies in Figur 9 dargestellt ist.

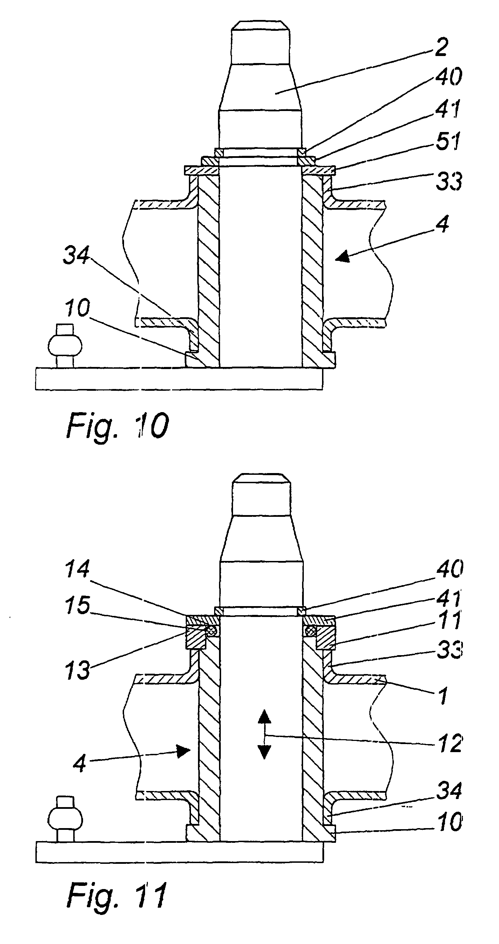

In Figur 10 ist eine einteilige Lagerbuchse 4 dargestellt. Die Lagerbuchse 4 weist einen unteren Bund 10 auf und ist von unten in das rohrförmige Element 3 eingeschoben, so daß der Bund 10 mit der Stirnseite des unteren Kragen 34 in Anlage kommt. Auf der oberen Seite schließt die Lagerbuchse 4 mit oder leicht unter der Stirnseite des oberen Kragens 33 ab. Die Abtriebswelle stützt sich über einen Sicherungsring 40, einen Anlaufring 41 und über einen Lagerring 51 auf der Stirnseite des oberen Kragens 33 ab. Der Lagerring 51 ist auf der Stirnseite des oberen Kragens 33 arretiert, damit die Relativbewegung zwischen dem Anlaufring 41 und dem Lagerring 51 stattfindet.

Eine weitere einteilige Lagerbuchse 4 mit einem Lagerring 11 ist in Figur 11 dargestellt. Die Lagerbuchse 4 ist von unten in das rohrförmige Element 3 eingeschoben und wird in axialer Richtung 12 nach oben durch einen unteren Bund 10 fixiert, der formschlüssig mit der Stirnseite des unteren Kragen 34 in Anlage kommt. Oben ragt die Lagerbuchse 4 über den Kragen 33 heraus. Auf den herausragenden Teil ist der Lagering 11 aufgeschraubt oder aufgeschoben, der formschlüssig mit der Stirnseite des oberen Kragens 33 in Anlage kommt. Der Lagerring 11 ragt wiederum in axialer Richtung 12 über die Lagerbuchse 4 heraus und bildet mit dem vorstehenden Teil 13 zur Abtriebswelle 2 einen Bauraum 14 für eine Dichtung 15. Die Abtriebswelle 2 stützt sich demnach in axialer Richtung 12 von unten nach oben auf dem Bund 10 und von oben nach unten über einen Sicherungsring 40 und einen Anlaufring 41 auf dem Lagering 11 ab, der formschlüssig mit der Stirnseite des Kragens 33 in Anlage kommt.

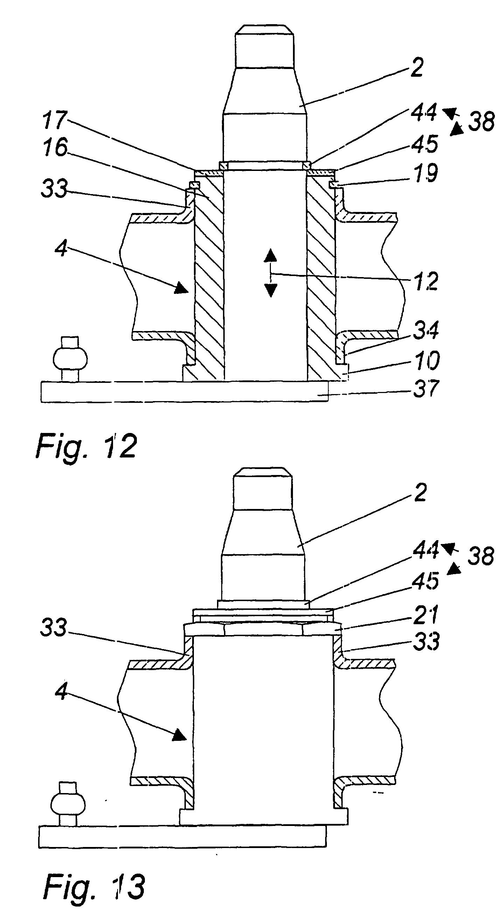

In Figur 12 weist die Lagerbuchse 4 eine Wandung 16 auf, die als Anlauffläche 17 genutzt wird. Die Lagerbuchse 4 ist auf der Abtriebswelle 2 mit Ringen 18, einem Sicherungsring 44 und einem Anlaufring 45, vormontiert und wird als Baugruppe mit der Abtriebswelle 2 in das rohrförmige Element 3 eingesetzt. In axialer Richtung 12 von unten nach oben stützt sich die Abtriebswelle 2 über einen Steg 37, auf einem Bund 10 der Lagerbuchse 4 und dieser sich auf der Stirnseite des unteren Kragens 34 des rohrförmigen Elements 3 ab. In axialer Richtung 12 von oben nach unten wird die Lagerbuchse 4 durch einen Sicherungsring 19 fixiert. Die Abtriebswelle 2 stützt sich in axialer Richtung 12 von oben nach unten auf der Anlauffläche 17 der Lagerbuchse 4 über den Sicherungsring 44 und den Anlaufring 45 ab.

Der Sicherungsring 19, durch den die Lagerbuchse 4 axial fixiert wird, kann durch eine Überwurfmutter 21 ersetzt werden, wie dies beispielhaft in Figur 13 dargestellt ist.

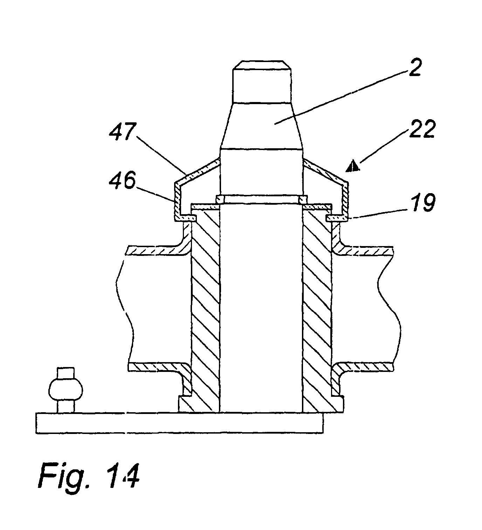

In einer Ausgestaltung der Erfindung kann der Sicherungsring 19 oder die Überwurfmutter 21 als Schutzkappe 20 gestaltet sein (Figur 14). Diese schirmt den oberen Bereich der Lagerung mit einem axialen und einem radialen Teil 46, 47 ab.

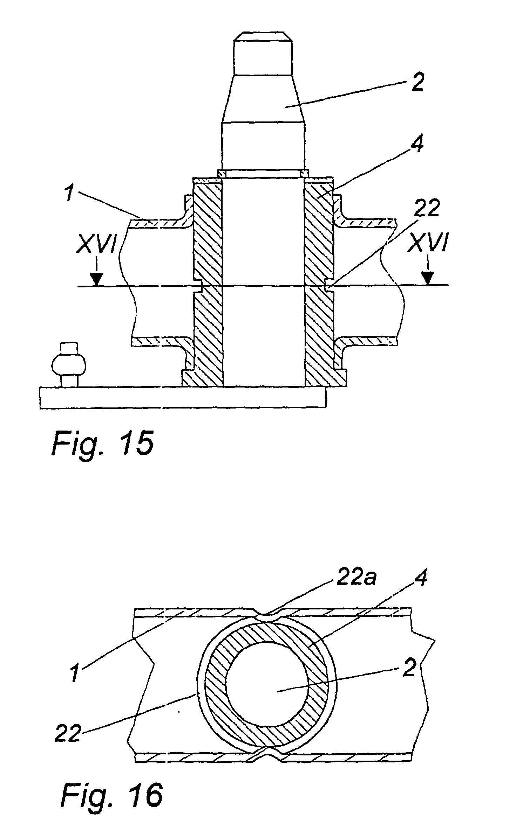

Eine weitere Variante, die Lagerbuchse 4 und damit die Baugruppe in axialer Richtung 12 von oben nach unten zu fixieren, besteht darin, das rohrförmige Element 3 in vorhandene Vertiefungen 22 in der Lagerbuchse 4, beispielsweise eine Nut 22a, zu prägen. Dies geschieht vorzugsweise 90° zur Längsrichtung der Rohrplatine 1 (Figuren 15 und 16).

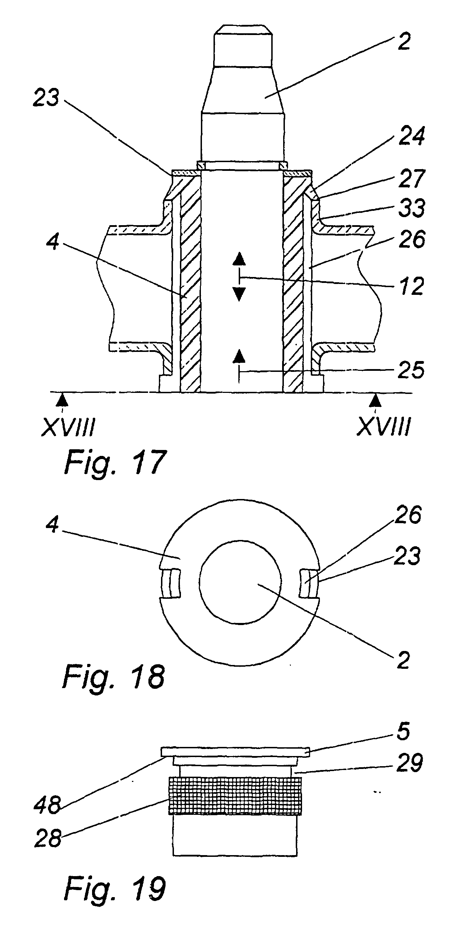

Bei einer Ausgestaltung der Erfindung wird mit einer über die Außenkontur 23 der Lagerbuchse 4 herausragenden Federzunge 24 die Lagerbuchse 4 in axialer Richtung 12 von oben nach unten fixiert. Die Federzunge 24 ist entgegen der Montagerichtung 25 gerichtet. Sie wird während der Montage in einen Freiraum 26 gedrückt und greift in der Montageendlage hinter eine axiale Anschlagfläche 27, die vorzugsweise durch die Stirnseite des oberen Kragens 33 des rohrförmigen Elements 3 gebildet wird (Figuren 17 und 18).

Ein relativ guter Kraftschluß wird in einer Ausgestaltung der Erfindung trotz kleiner Stützflächen erreicht, indem die Lagerbuchse 4 zumindest an ihrem Umfang einen Bereich aus verformbaren Material aufweist, der zum Bund 5 hin durch eine ringförmige Vertiefung 29 begrenzt ist. In Figur 19 ist eine vorteilhafte Ausgestaltung dargestellt, bei der die Lagerbuchse 4 aus Kunststoff besteht und an ihrem Umfang einen Längsrändel 28 aufweist, der durch eine Nut 29 zum Bund 5 hin begrenzt ist. Wird die Lagerbuchse 4 in das rohrförmige Element 3 eingeschoben, sammeln sich Abschälungen in der Nut 29 an. Der Bund 5 oder 10 legt sich mit der nach innen weisenden Seite 48 sauber an der Stirnseite des oberen oder unteren Kragen 33, 34 des rohrförmigen Elements 3 an.

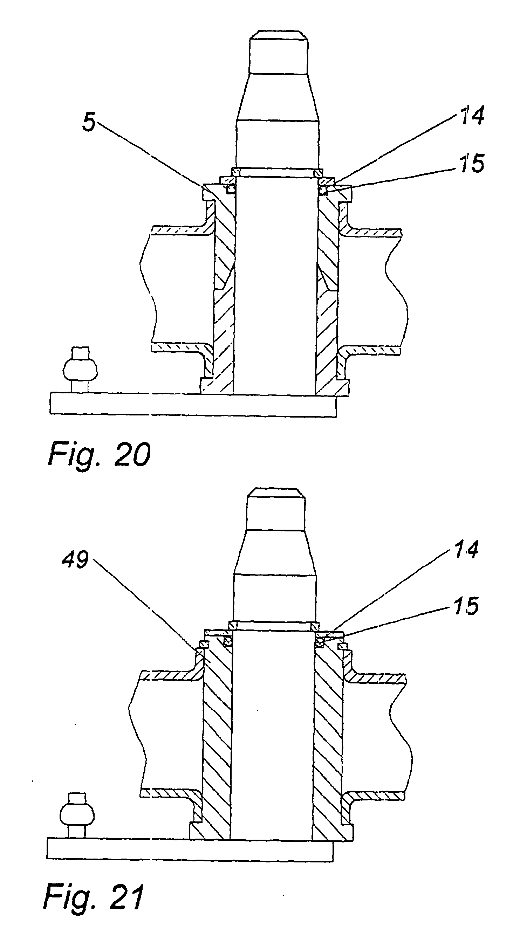

In den Figuren 20 und 21 sind Lagerbuchsen 4 mit integrierten Bauräumen 14 für Dichtungen 15 dargestellt. Hierdurch wird eine kompakte und fettdichte Lagerung erreicht. In Figur 20 ist der Bauraum 14 in dem Bund 5 integriert, in Figur 21 in der Wandung 49 der Lacerbuchse 4.

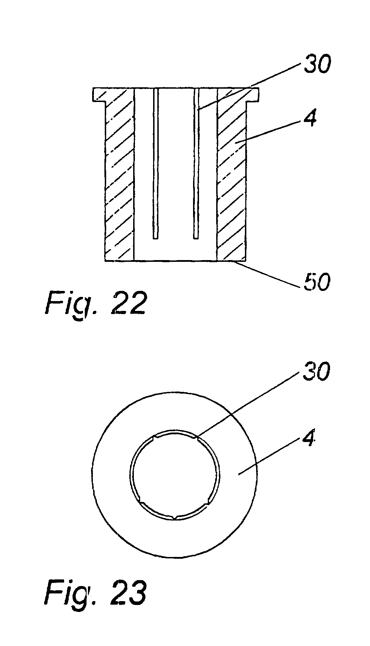

In einer Ausgestaltung der Erfindung weist die Lagerbuchse 4 vorzugsweise in axialer Richtung 12 vcn oben nach unten Schmiernuten 30 bzw. Schmiertaschen 30 auf, die vorzugsweise gleichmäßig am Umfang verteilt sind, z.B. fünfmal, und durchgehend oder oberhalb der Unterkante 50 der Lagerbuchse 4 enden. In diese wird Schmiermittel eingebracht, wodurch über eine lange Zeit die Oberfläche der Abtriebswelle 2 mit Schmiermittel versorgt wird. Auf diese Weise wird mit einer einfachen Konstruktion eine gute Schmierung des Lagers erreicht (Figuren 22 und 23).

## Patentansprüche

1. Wischeranlage mit einer Rohrplatine (1), die zur Lagerung von Abtriebswellen (2) mindestens ein rohrförmiges Element (3) hat, in das eine Lagerbuchse (4) eingebracht ist, **dadurch gekennzeichnet, daß** die Lagerbuchse (4) gegenüber dem rohrförmigen Element (3) in axialer Richtung formschlüssig fixiert ist.

2. Wischeranlage nach Anspruch 1, **dadurch gekennzeichnet, daß** die Lagerbuchse (4) mindestens einen Bund (5, 10) aufweist.

3. Wischeranlage nach Anspruch 1 oder 2, **dadurch gekennzeichnet, daß** das rohrförmige Element (3) eine von der Kreisform abweichende, insbesondere polygonförmige oder unrunde Innenkontur (6) und die Lagerbuchse (4) eine passende Außenkontur (7) aufweist.

4. Wischeranlage nach einem der vorhergehenden Ansprüche, **dadurch gekennzeichnet, daß** die Kontur (52) zwischen der Lagerbuchse (4) und dem rohrförmigen Element (3) in axialer Richtung (12) konisch ist.

5. Wischeranlage nach einem der Ansprüche 1 bis 3, **dadurch gekennzeichnet, daß** die Kontur (52) zwischen der Lagerbuchse (3) und dem rohrförmigen Element (3) in axialer Richtung (12) abgestuft ist.

6. Wischeranlage nach einem der vorhergehenden Ansprüche, **dadurch gekennzeichnet, daß** die Lagerbuchse (4) in Querrichtung mindestens zweigeteilt ist.

7. Wischeranlage nach Anspruch 6, **dadurch gekennzeichnet, daß** die Teile (8, 9) der Lagerbuchse (4) überlappend ineinander gefügt sind.

8. Wischeranlage nach Anspruch 7, **dadurch gekennzeichnet, daß** die Teile (8, 9) der Lagerbuchse (4) durch eine Rastverbindung (39) verbunden sind.

9. Wischeranlage nach einem der vorhergehenden Ansprüche, **dadurch gekennzeichnet, daß** auf der Lagerbuchse (4) ein Lagerring (11) angeordnet ist.

10. Wischeranlage nach Anspruch 9, **dadurch gekennzeichnet, daß** der Lagerring (11) in axialer Richtung (12) über die Lagerbuchse (4) vorsteht und mit dem vorstehenden Teil (13) zur Abtriebswelle (2) einen Bauraum (14) für eine Dichtung (15) bildet.

11. Wischeranlage nach einem der vorhergehenden Ansprüche, **dadurch gekennzeichnet, daß** die Lagerbuchse (4) eine Wandung (16) aufweist, die als Anlauffläche (17) genutzt wird.

12. Wischeranlage nach Anspruch 11, **dadurch gekennzeichnet, daß** die Lagerbuchse (4) auf der Abtriebswelle (2) als Baugruppe vormontiert ist, und die Baugruppe in das rohrförmige Element (3) eingesetzt ist.

13. Wischeranlage nach Anspruch 12, **dadurch gekennzeichnet, daß** die Lagerbuchse (4) mit einem Sicherungsring (19) axial im rohrförmigen Element (3) gehalten ist.

14. Wischeranlage nach Anspruch 13, **dadurch gekennzeichnet, daß** der Sicherungsring (19) als Schutzkappe (20) gestaltet ist.

15. Wischeranlage nach einem der Ansprüche 13 oder 14, **dadurch gekennzeichnet, daß** eine Überwurfmutter (21) den Sicherungsring (19) bildet.

16. Wischeranlage nach einem der vorhergehenden Ansprüche, **dadurch gekennzeichnet, daß** die Lagerbuchse (4) am Umfang mindestens eine Vertiefung (22) aufweist, in die das rohrförmige Element (3) eingepreßt ist.

17. Wischeranlage nach einem der Ansprüche 11 oder 12, **dadurch gekennzeichnet, daß** die Lagerbuchse (4) eine über die Außenkontur (23) herausragende Federzunge (24) aufweist, die entgegen der Montagerichtung (25) gerichtet ist, während der Montage in einen Freiraum (26) gedrückt ist und in der Montageendlage eine axiale Anschlagfläche (27) hintergreift.

18. Wischeranlage nach Anspruch 17, **gekennzeichnet durch** eine bei der Herstellung der Lagerbuchse (4) angeformte Federzunge (24).

19. Wischeranlage nach einem der vorhergehenden Ansprüche, **dadurch gekennzeichnet, daß** das rohrförmige Element (3) mit einem Dorn kalibriert ist.

20. Wischeranlage nach einem der vorhergehenden Ansprüche, **dadurch gekennzeichnet, daß** die Lagerbuchse (4) mit mindestens einem Eund (5) an ihrem Umfang einen Bereich aus verformbaren Material aufweist, der zum Bund (5) hin durch eine ringförmige Vertiefung (29) begrenzt ist.

21. Wischeranlage nach einem der vorhergehenden Ansprüche, **dadurch gekennzeichnet, daß** ein Bauraum (14) für eine Dichtung (15) in cer Lagerbuchse (4) integriert ist.

22. Wischeranlage nach einem der vorhergehenden Ansprüche, **dadurch gekennzeichnet, daß** die Lagerbuchse (4) Schmiernuten (30) aufweist.

## Claims

1. Wiper system having a tube blank (1) which, for the mounting of output shafts (2), has at least one tubular element (3) in which a bearing bushing (4) is fitted, **characterized in that** the bearing bushing (4) is fixed with respect to the tubular element (3) in the axial direction in an interlocking manner.

2. Wiper system according to Claim 1, **characterized in that** the bearing bushing (4) has at least one collar (5, 10).

3. Wiper system according to Claim 1 or 2, **characterized in that** the tubular element (3) has an internal contour (6) which deviates from the circular shape and is, in particular, polygonal or non-circular, and the bearing bushing (4) has a matching outer contour (7).

4. Wiper system according to one of the preceding claims, **characterized in that** the contour (52) between the bearing bushing (4) and the tubular element (3) is conical in the axial direction (12).

5. Wiper system according to one of Claims 1 to 3, **characterized in that** the contour (52) between the bearing bushing (4) and the tubular element (3) is stepped in the axial direction (12).

6. Wiper system according to one of the preceding claims, **characterized in that** the bearing bushing (4) is in at least two parts in the transverse direction.

7. Wiper system according to Claim 6, **characterized in that** the parts (8, 9) of the bearing bushing (4) are fitted one into the other in an overlapping manner.

8. Wiper system according to Claim 7, **characterized in that** the parts (8, 9) of the bearing bushing (4) are connected by a latching connection (39).

9. Wiper system according to one of the preceding claims, **characterized in that** a bearing ring (11) is arranged on the bearing bushing (4).

10. Wiper system according to Claim 9, **characterized in that** the bearing ring (11) protrudes over the bearing bushing (4) in the axial direction (12) and with the part (13) protruding to the output shaft (2) forms a structural space (14) for a seal (15).

11. Wiper system according to one of the preceding claims, **characterized in that** the bearing bushing (4) has a wall (16) which is used as a run-on surface (17).

12. Wiper system according to Claim 11, **characterized in that** the bearing bushing (4) is preassembled on the output shaft (12) as a subassembly, and the subassembly is inserted into the tubular element (3).

13. Wiper system according to Claim 12, **characterized in that** the bearing bushing (4) is held axially in the tubular element (3) by a securing ring (19).

14. Wiper system according to Claim 13, **characterized in that** the securing ring (19) is designed as a protective cap (20).

15. Wiper system according to one of Claims 13 or 14, **characterized in that** a union nut (21) forms the securing ring (19).

16. Wiper system according to one of the preceding claims, **characterized in that** the bearing bushing (4) has, on the circumference, at least one depression (22) into which the tubular element (3) is pressed.

17. Wiper system according to one of Claims 11 or 12, **characterized in that** the bearing bushing (4) has a spring tongue (24) which projects over the external contour (23) and is directed counter to the installation direction (25), is pressed into a clearance (26) during the installation and in the final installation position grips behind an axial stop surface (27).

18. Wiper system according to Claim 17, **characterized by** a spring tongue (24) which is integrally formed during the production of the bearing bushing (4).

19. Wiper system according to one of the preceding claims, **characterized in that** the tubular element (3) is calibrated by a mandrel.

20. Wiper system according to one of the preceding claims, **characterized in that** the bearing bushing (4) having at least one collar (5) has, on its circumference, a region of deformable material which is bounded towards the collar (5) by an annular depression (29).

21. Wiper system according to one of the preceding claims, **characterized in that** a structural space (14) for a seal (15) is integrated in the bearing bushing (4).

22. Wiper system according to one of the preceding claims, **characterized in that** the bearing bushing (4) has lubricating grooves (30).

## Revendications

1. Installation d'essuie-glace comprenant une platine tubulaire (1) qui, pour le montage d'arbres de sortie (2) présente au moins un élément tubulaire (3) dans lequel est insérée une douille de palier (4),
**caractérisée en ce que**
la douille de palier (4) est, par rapport à l'élément tubulaire (3), fixée en direction axiale par combinaison de formes.

2. Installation d'essuie-glace selon la revendication 1,
**caractérisée en ce que**
la douille de palier (4) présente au moins un collet (5, 10).

3. Installation d'essuie-glace selon l'une quelconque des revendications 1 ou 2,
**caractérisée en ce que**
l'élément tubulaire (3) présente un contour interne (6) s'écartant de la forme circulaire, en particulier de forme polygonale, et la douille de palier (4) a un contour externe (7) ajusté à cette forme.

4. Installation d'essuie-glace selon l'une quelconque des revendications précédentes,
**caractérisée en ce que**
le contour (52) entre la douille de palier (4) et l'élément tubulaire (7) est conique dans la direction axiale (12).

5. Installation d'essuie-glace selon l'une quelconque des revendications 1 à 3,
**caractérisée en ce que**
le contour (52) entre la douille de palier (4) et l'élément tubulaire (3) présente un gradin selon la direction axiale (12).

6. Installation d'essuie-glace selon l'une quelconque des revendications précédentes,
**caractérisée en ce que**
la douille de palier (4) est divisée transversalement en deux parties.

7. Installation d'essuie-glace selon la revendication 6,
**caractérisée en ce que**
les parties (8, 9) de la douille de palier (4) sont jointives avec recouvrement de l'une par l'autre.

8. Installation d'essuie-glace selon la revendication 7,
**caractérisée en ce que**
les parties (8, 9) de la douille de palier (4) sont reliées par une liaison à creux (39).

9. Installation d'essuie-glace selon l'une quelconque des revendications précédentes,
**caractérisée en ce que**
sur la douille de palier (4) est montée une bague de palier (11).

10. Installation d'essuie-glace selon la revendication 9,
**caractérisée en ce que**
la bague de palier (11) fait saillie en direction axiale (12) sur la douille de palier (4) et cette partie de saillie (13) forme, avec l'arbre de sortie (2) un espace (14) pour loger un joint d'étanchéité (15).

11. Installation d'essuie-glace selon l'une quelconque des revendications précédentes,
**caractérisée en ce que**
la douille de palier (4) présente une paroi (16) utilisée comme surface d'arrêt (17).

12. Installation d'essuie-glace selon la revendication 11,
**caractérisée en ce que**
la douille de palier (4) est prémontée sur l'arbre de sortie (2) pour former un groupe constructif qui est inséré dans l'élément tubulaire (3).

13. Installation d'essuie-glace selon la revendication 12,
**caractérisée en ce que**
la douille de palier (4) est maintenue axialement dans l'élément tubulaire (3) par une bague de sécurité (19).

14. Installation d'essuie-glace selon la revendication 13,
**caractérisée en ce que**
la bague de sécurité (19) a la forme d'un capot de protection (20).

15. Installation d'essuie-glace selon l'une quelconque des revendications 13 ou 14,
**caractérisée en ce qu'**
un écrou-chapeau (21) constitue la bague de sécurité (19).

16. Installation d'essuie-glace selon l'une quelconque des revendications précédentes,
**caractérisée en ce que**
la douille de palier (4) porte sur sa périphérie au moins une cavité (22) dans laquelle l'élément tubulaire (3) est enfoncé à force.

17. Installation d'essuie-glace selon l'une quelconque des revendications 11 ou 12,
**caractérisée en ce que**
la douille de palier (4) présente, faisant saillie sur son contour externe (23), une languette élastique (24) dirigée à l'opposé du sens de montage (25) et qui, lors du montage est poussée dans un espace vide (26) pour, en position finale, se trouver en prise derrière une portée de butée axiale (27).

18. Installation d'essuie-glace selon la revendication 17,
**caractérisée en ce que**
la languette élastique (24) est formée sur la douille de palier (4) lors de la fabrication de celle-ci.

19. Installation d'essuie-glace selon l'une quelconque des revendications précédentes,
**caractérisée en ce que**
l'élément tubulaire (3) est calibré au moyen d'un mandrin.

20. Installation d'essuie-glace selon l'une quelconque des revendications précédentes,
**caractérisée en ce que**
la douille de palier (4) qui porte au moins un collet (5) sur sa périphérie, présente une zone faite d'un matériau déformable et qui, du côté du collet (5) est délimitée par une cavité annulaire (29).

21. Installation d'essuie-glace selon l'une quelconque des revendications précédentes,
**caractérisée en ce qu'**
un espace de montage (14), pour accueillir un joint d'étanchéité (15) est intégré à la douille de palier (4).

22. Installation d'essuie-glace selon l'une quelconque des revendications précédentes,
**caractérisée en ce que**
la douille de palier (4) présente des rainures de graissage (30).
